(19) Europäisches Patentamt
European Patent Office
Office européen des brevets

(11) EP 4 108 703 A1

(12) **EUROPEAN PATENT APPLICATION**
published in accordance with Art. 153(4) EPC

(43) Date of publication:
**28.12.2022 Bulletin 2022/52**

(21) Application number: **21756936.7**

(22) Date of filing: **05.02.2021**

(51) International Patent Classification (IPC):
***C08G 63/133*** *(2006.01)*

(52) Cooperative Patent Classification (CPC):
**C08G 63/133**

(86) International application number:
**PCT/JP2021/004433**

(87) International publication number:
**WO 2021/166700 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.02.2020 JP 2020024137**

(71) Applicant: **TOYOBO CO., LTD.**
**Osaka-shi**
**Osaka 5300001 (JP)**

(72) Inventor: **UCHIYAMA, Shoko**
**Otsu-shi, Shiga 520-0292 (JP)**

(74) Representative: **Müller-Boré & Partner Patentanwälte PartG mbB**
**Friedenheimer Brücke 21**
**80639 München (DE)**

# (54) AROMATIC POLYESTER AND METHOD FOR PRODUCING SAME

(57) The present invention provides an aromatic polyester having several operative functional groups and a method for producing same. An aromatic polyester comprising a polycarboxylic acid component and a polyhydric alcohol component as a copolymerization component, wherein the aromatic polyester comprises a polycarboxylic acid component having an operative functional group by 50 mol% or more when a total amount of the polycarboxylic acid component is taken as 100 mol%, and the aromatic polyester comprises an aromatic polyhydric alcohol component by 50 mol% or more when a total amount of the polyhydric alcohol component is taken as 100 mol%.

EP 4 108 703 A1

## Description

TECHNICAL FIELD

The present invention relates to an aromatic polyester having a functional group. More specifically, the present invention relates to an aromatic polyester having an operative functional group that can be produced by polymerization while retaining an operative functional group derived from carboxylic acid component without causing gelation.

BACKGROUND ART

Copolymerized polyester resin is widely used as a raw material for resin composition applied to a paint, a coating, an adhesive and the like. Copolymerized polyester resin is generally composed of polycarboxylic acid and polyhydric alcohol. We can freely select and combine the polycarboxylic acid and the polyhydric alcohol, and control height of molecular weight. The produced copolymerized polyester resin is used in various applications, including a paint application or an adhesive application. Especially, an aromatic polyester is industrially useful because of its excellent heat resistance and chemical resistance.

Among them, the aromatic polyester having a branched functional group (an operative functional group), which does not involve in polymerization, such as hydroxy group or carboxy group and the like is particularly and industrially useful because of its good reactivity with a curing agent and the like. For example, Patent Literature 1 discloses polyester resin having a polymerizable double bond. Patent Literature 2 also discloses an unsaturated polyester resin comprising an ester unit of itaconic acid as a reactive unsaturated site.

In contrast, an example of an aliphatic polyester having several operative functional groups, which was synthesized using rare-earth triflate catalyst, has been reported (Patent Literature 3).

CITATION LIST

PATENT LITERATURE

Patent Literature 1: JP 2001-302779 A
Patent Literature 2: JP 2012-521469 A
Patent Literature 3: JP 2003-306535 A

SUMMARY OF THE INVENTION

PROBLEMS TO BE SOLVED BY THE INVENTION

However, although the polyester resin in Patent Literature 1 has a polymerizable double bond as the operative functional group, it needs a large amount of monomers not having the operative functional group as the copolymerization component. Therefore, the concentration thereof is low and it cannot be said that the resin has high industrial utility value. Additionally, we found that increase of concentration of polymerizable double bond in the polyester resin caused isomerization or gelation due to three-dimensional crosslinks during polymerization. Patent Literature 2 discloses polyester resin produced by polycondensation of at least one type of polyols and unsaturated carboxylic acids such as itaconic acid, citraconic acid and/or mesaconic acid, however, the resin does not comprise aromatic skeleton. Further, for suppressing isomerization or gelation during polymerization, radical inhibitor is needed as an essential component. Therefore, it has low industrial utility value and is also cause of impurities. Additionally, in Patent Literature 3, polycondensation of aliphatic monomers having various functional groups (operative functional groups) except for a functional group involved in polymerization is investigated. However, aromatic monomers are not considered. This is because, in case of the direct polymerization of dicarboxylic acid and diol, aromatic dicarboxylic acid with a melting point of 300°C or higher and diol are generally subjected to esterification reaction at a high temperature such as a diol's boiling point or more (for example, 200 to 240°C), thus a large amount of energy is consumed during polycondensation. Furthermore, there are technical reasons why both terephthalic acid and isophthalic acid, which are generally used as raw materials for aromatic polyester, have a melting point of 300°C or higher, and because of sublimable crystals, they are difficult to handle.

The present invention is aim to provide an aromatic polyester having several operative functional groups that does not involve in polymerization, which have been difficult to synthesize before, and a method for synthesizing same.

SOLUTION TO THE PROBLEMS

As a result of thorough research of the present inventors, they found that the above problems could be solved by means discussed above, and completed the present invention. Thus, the present invention has the following points.

An aromatic polyester comprising a polycarboxylic acid component and a polyhydric alcohol component as a copolymerization component, wherein, the aromatic polyester comprises a polycarboxylic acid component having an operative functional group by 50 mol% or more when a total amount of the polycarboxylic acid component is taken as 100 mol%, and the aromatic polyester comprises an aromatic polyhydric alcohol component by 50 mol% or more when a total amount of the polyhydric alcohol component is taken as 100 mol%.

It is preferable that the operative functional group is one or more selected from the group consisting of hydroxy group, sulfanyl group, carboxy group, formyl group, azido group, halogen, disulfide group, sulfonyl group, sulfinyl group and methylidene group.

It is preferable that the aromatic polyester comprising a constitutional unit represented by the following formula (1):

[Chemical formula 1]

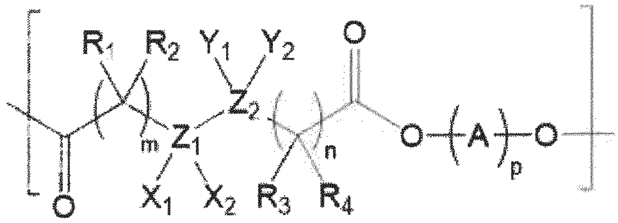

(1)

(in the formula (1),

$X_1$, $X_2$, $Y_1$ and $Y_2$ are each independently hydrogen, alkyl group, hydroxy group, sulfanyl group, carboxy group, formyl group, azido group, halogen, oxygen or methylidene group.
$Z_1$-$X_1$ bond, $Z_1$-$X_2$ bond, $Z_2$-$Y_1$ bond and $Z_2$-$Y_2$ bond are each independently a single bond or a double bond.
$Z_1$-$Z_2$ bond is a single bond, a double bond or an S-S bond.
When $X_1$, $X_2$, $Y_1$ and $Y_2$ are all hydrogen or alkyl group; $Z_1$-$X_1$ bond, $Z_1$-$X_2$ bond, $Z_2$-$Y_1$ bond and $Z_2$-$Y_2$ bond are all single bonds and $Z_1$-$Z_2$ bond is a double bond.
When $Z_1$-$Z_2$ bond is an S-S bond; $X_1$, $X_2$, $Y_1$ and $Y_2$ are each independently oxygen or absent.
When $X_1$ is methylidene group; $Z_1$-$X_1$ bond is a double bond, $X_2$ is absent, $Z_1$-$Z_2$ bond is a single bond.
When $X_2$ is methylidene group; $Z_1$-$X_2$ bond is a double bond, $X_1$ is absent, $Z_1$-$Z_2$ bond is a single bond.
When $Y_1$ is methylidene group; $Z_2$-$Y_1$ bond is a double bond, $Y_2$ is absent, $Z_1$-$Z_2$ bond is a single bond.
When $Y_2$ is methylidene group; $Z_2$-$Y_2$ bond is a double bond, $Y_1$ is absent, $Z_1$-$Z_2$ bond is a single bond.
"A" is a residue of the aromatic polyhydric alcohol.
$R_1$, $R_2$, $R_3$ and $R_4$ are each independently hydrogen or alkyl group.
"m" and "n" each independently represent an integer of 0 to 10.
"p" represents an integer of 1 to 10.)

The aromatic polyester preferably comprises fluorine by 500 mass ppm or more, and sulfur by 250 mass ppm or more. It is preferable that the aromatic polyester is substantially free from an organic solvent. Additionally, the aromatic polyester is produced by a process comprising a step of low-temperature melt polycondensation at 80 to 150°C.

An adhesive or a paint comprising the aromatic polyester.

ADVANTAGEOUS EFFECTS OF THE INVENTION

The aromatic polyester of the present invention comprises a predetermined amount of the operative functional group. When the operative functional group is a double bond, the aromatic polyester comprising a double bond at a main chain gives a reactive site for thiol-ene reaction and Michael addition reaction. Additionally, when the operative functional group is halogen, the aromatic polyester comprising halogen at a main chain enables various chemical modifications, such as giving a site for initiating living radical polymerization, and the like.

DESCRIPTION OF EMBODIMENTS

The aromatic polyester of the present invention is a resin comprising a polycarboxylic acid component and a polyhydric alcohol component as a copolymerization component, wherein the aromatic polyester comprises a polycarboxylic acid component having an operative functional group by 50 mol% or more when a total amount of the polycarboxylic acid component is taken as 100 mol%, and the aromatic polyester comprises an aromatic polyhydric alcohol component by 50 mol% or more when a total amount of the polyhydric alcohol component is taken as 100 mol%.

The operative functional group is preferably a reactive functional group except for the functional group involved in polymerization (dicarboxylic acid). Specifically, the operative functional group is preferably one or more selected from the group consisting of hydroxy group (-OH), sulfanyl group (-SH), carboxy group ($-CO_2H$), formyl group (-CHO), azido group ($-N_3$), halogen (-F, -Cl, -Br, -I), disulfide group (-S-S-), sulfinyl group (-S(=O)-), sulfonyl group ($-S(=O)_2-$) and methylidene group ($=CH_2$).

The polycarboxylic acid component having an operative functional group is exemplified by an aromatic polycarboxylic acid having an operative functional group, an aliphatic polycarboxylic acid having an operative functional group or an alicyclic polycarboxylic acid having an operative functional group, preferably an aromatic dicarboxylic acid having an operative functional group, an aliphatic dicarboxylic acid having an operative functional group or an alicyclic dicarboxylic acid having an operative functional group, and more preferably an aliphatic dicarboxylic acid having an operative functional group.

The polycarboxylic acid component having an operative functional group is not particularly limited, and exemplified by maleic acid (an unsaturated bond), fumaric acid (an unsaturated bond), citraconic acid (an unsaturated bond), itaconic acid (an unsaturated bond), malic acid (OH), tartaric acid (OH), thiomalic acid (SH), bromosuccinic acid (Br), azidosuccinic acid ($N_3$), 3,3-dithiodipropionic acid (S-S), tricarboxylic acid (COOH) and the like. Among them, one type or two or more types may be selected and used.

When a total amount of the polycarboxylic acid component in the aromatic polyester is taken as 100 mol%, the aromatic polyester needs to comprise the polycarboxylic acid component having an operative functional group by 50 mol% or more, preferably 60 mol% or more, more preferably 70 mol% or more, further preferably 80 mol% or more, much further preferably 90 mol% or more, especially preferably 95 mol% or more, most preferably 99 mol% or more, and 100 mol% may be acceptable.

Furthermore, as a copolymerization component, a polycarboxylic acid component except for the polycarboxylic acid component having an operative functional group may be used in combination. The polycarboxylic acid component except for the polycarboxylic acid component having an operative functional group is preferably a polycarboxylic acid not having a reactive functional group except for a functional group involved in polymerization (dicarboxylic acid) (hereinafter, also referred to as a polycarboxylic acid component not having an operative functional group). The polycarboxylic acid component not having an operative functional group is exemplified by an alicyclic polycarboxylic acid, an aliphatic polycarboxylic acid or an aromatic polycarboxylic acid and the like shown below. The alicyclic polycarboxylic acid is exemplified by an alicyclic dicarboxylic acid such as 1,4-cyclohexanedicarboxylic acid, 1,3-cyclohexanedicarboxylic acid, 1,2-cyclohexanedicarboxylic acid, an acid anhydride thereof and the like. The aliphatic polycarboxylic acid is exemplified by an aliphatic dicarboxylic acid such as succinic acid, adipic acid, azelaic acid, sebacic acid, dodecanedioic acid, dimer acid, 1,2,3-propanetricarboxylic acid, 1,3,5-pentanetricarboxylic acid and the like. The aromatic polycarboxylic acid is exemplified by an aromatic dicarboxylic acid such as terephthalic acid, isophthalic acid, *ortho*-phthalic acid, naphthalene dicarboxylic acid, biphenyldicarboxylic acid, diphenic acid, 5-hydroxyisophthalic acid and the like; an aromatic dicarboxylic acid having sulfonic acid group or sulfonate group such as sulfoterephthalic acid, 5-sulfoisophthalic acid, 4-sulfophthalic acid, 4-sulfonaphthalene-2,7-dicarboxylic acid, 5-(4-sulfophenoxy)isophthalic acid, sulfoterephthalic acid, and/or metal salts thereof, ammonium salts thereof and the like; and the like. Among them, one type or two or more types may be selected and used.

When a total amount of the polycarboxylic acid component in the aromatic polyester is taken as 100 mol%, the aromatic polyester preferably comprises the polycarboxylic acid component not having an operative functional group by 50 mol% or less, more preferably 40 mol% or less, further preferably 30 mol% or less, much further preferably 20 mol% or less, even more preferably 10 mol% or less, especially preferably 5 mol% or less, most preferably 1 mol% or less, and 0 mol% may be acceptable.

The aromatic polyhydric alcohol component for the aromatic polyester of the present invention may or may not have the operative functional group (a reactive functional group except for a functional group involved in polymerization (diol)). The aromatic polyhydric alcohol is preferably an aromatic polyhydric alcohol component not having an operative functional group, more preferably an aromatic diol component not having an operative functional group. The aromatic diol not having an operative functional group is not particularly limited, and preferably exemplified by an aromatic diol compound, a glycol-modified aromatic diol compound, and a glycol-modified aromatic dicarboxylic acid, and more preferably a glycol-modified aromatic diol compound or a glycol-modified aromatic dicarboxylic acid. An aromatic glycol compound is not particularly limited, and exemplified by 1,2-phenylene glycol, 1,3-phenylene glycol, 1,4-phenylene

glycol, naphthalenediol, bisphenol A, bisphenol F and the like. Additionally, the glycol-modified aromatic diol compound is not particularly limited, and exemplified by an ethylene oxide adduct of 1,2-phenylene glycol, a propylene oxide adduct of 1,2-phenylene glycol, an ethylene oxide adduct of 1,3-phenylene glycol, a propylene oxide adduct of 1,3-phenylene glycol, an ethylene oxide adduct of 1,4-phenylene glycol, a propylene oxide adduct of 1,4-phenylene glycol, an ethylene oxide adduct of naphthalenediol, a propylene oxide adduct of naphthalenediol, an ethylene oxide adduct of bisphenol A, a propylene oxide adduct of bisphenol A, an ethylene oxide adduct of bisphenol F, a propylene oxide adduct of bisphenol F and the like. Additionally, the glycol-modified aromatic dicarboxylic acid is not particularly limited, and exemplified by ethylene-glycol-modified terephthalic acid, propylene-glycol-modified terephthalic acid, ethylene-glycol-modified isophthalic acid, propylene-glycol-modified isophthalic acid, ethylene-glycol-modified *ortho*-phthalic acid, propylene-glycol-modified *ortho*-phthalic acid and the like. Furthermore, the glycol-modified aromatic dicarboxylic acid is also exemplified by a glycol-modified aromatic dicarboxylic acid such as naphthalene dicarboxylic acid, biphenyldicarboxylic acid, diphenic acid, 5-hydroxyisophthalic acid; a glycol-modified aromatic dicarboxylic acid having sulfonic acid group or sulfonate group such as sulfoterephthalic acid, 5-sulfoisophthalic acid, 4-sulfophthalic acid, 4-sulfonaphthalene-2,7-dicarboxylic acid, 5-(4-sulfophenoxy)isophthalic acid, sulfoterephthalic acid, and/or metal salts thereof, ammonium salts thereof; and the like. These may be used alone or in combination of two or more. Among them, the more preferred is an ethylene oxide adduct of 1,4-phenylene glycol, bisphenol A, glycols in which one to several mols of ethylene oxide or propylene oxide is added to each two phenolic hydroxyl group in bisphenols such as an ethylene oxide adduct of bisphenol A (manufactured by Sanyo Chemical Industries, Ltd., NEWPOL (registered trademark) BPE-20T) and a propylene oxide adduct of bisphenol A (manufactured by Sanyo Chemical Industries, Ltd., NEWPOL BP-5P), BHET (ethylene-glycol-modified terephthalic acid) and the like.

When the polyhydric alcohol component in the aromatic polyester is taken as 100 mol%, the aromatic polyester needs to comprise the aromatic diol component by 50 mol% or more, preferably 60 mol% or more, more preferably 70 mol% or more, further preferably 80 mol% or more, much further preferably 90 mol% or more, especially preferably 95 mol% or more, most preferably 99 mol% or more, and 100 mol% may be acceptable.

Furthermore, in addition to the aromatic polyhydric alcohol component, a polyhydric alcohol component, such as an aliphatic polyhydric alcohol, an alicyclic polyhydric alcohol, a glycol having ether bond and the like shown below, can be used in combination.

The aliphatic polyhydric alcohol is exemplified by ethylene glycol, 1,2-propylene glycol, 1,3-propanediol, 1,4-butanediol, 1,5-pentanediol, 2-methyl-1,3-propanediol, neopentyl glycol, 1,6-hexanediol, 3-methyl-1,5-pentanediol, 1,7-heptanediol, 1,8-octanediol, 1,9-nonanediol, 2-ethyl-2-butyl-propanediol, hydroxypivalic acid neopentyl glycol ester, dimethylolheptane, 2,2,4-trimethyl-1,3-pentanediol, polycarbonatediol (manufactured by Asahi Kasei Corp., DURANOL (registered trademark)) and the like. The alicyclic polyhydric alcohol is exemplified by 1,4-cyclohexanediol, 1,4-cyclohexanedimethanol, tricyclodecanediol, tricyclodecanedimethylol, spiroglycol, hydrogenated bisphenol A, an ethylene oxide adduct of hydrogenated bisphenol A, a propylene oxide adduct of hydrogenated bisphenol A and the like. The glycol having ether bond is exemplified by diethylene glycol, triethylene glycol, dipropylene glycol, polyethylene glycol, polypropylene glycol, polytetramethylene glycol, an ethylene oxide adduct of neopentyl glycol or a propylene oxide adduct of neopentyl glycol. Among them, one type or two or more types may be selected and used.

Furthermore, in addition to the aromatic polyhydric alcohol component, a polyhydric alcohol component, such as a divalent or more alicyclic polycarboxylic acid component modified by glycols at both ends or a divalent or more aliphatic polycarboxylic acid component modified by glycols at both ends, can be used. The alicyclic polycarboxylic acid is exemplified by an alicyclic dicarboxylic acid such as 1,4-cyclohexanedicarboxylic acid, 1,3-cyclohexanedicarboxylic acid, 1,2-cyclohexanedicarboxylic acid, acid anhydride thereof and the like. The aliphatic polycarboxylic acid is exemplified by an aliphatic dicarboxylic acid such as succinic acid, adipic acid, azelaic acid, sebacic acid, dodecanedioic acid, dimer acid and the like.

When the polyhydric alcohol component in the aromatic polyester is taken as 100 mol%, the aromatic polyester may preferably comprise the aliphatic polyhydric alcohol component, the alicyclic polyhydric alcohol component and the glycol having ether bond component by 50 mol% or less, more preferably 40 mol% or less, further preferably 30 mol% or less, much further preferably 10 mol% or less, even more preferably 10 mol% or less, especially preferably 5 mol% or less, most preferably 1 mol% or less, and 0 mol% may be acceptable.

The aromatic polyester of the present invention preferably comprises a constitutional unit represented by following formula (1):

[Chemical formula 1]

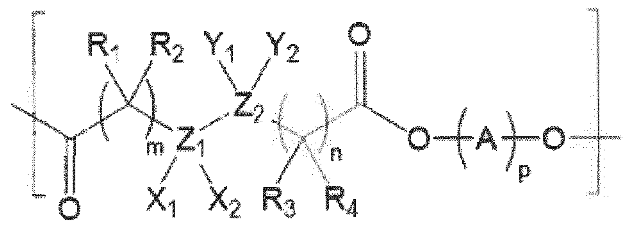

(1)

In the formula (1), $X_1$, $X_2$, $Y_1$ and $Y_2$ are each independently hydrogen (-H), alkyl group, hydroxy group (-OH), sulfanyl group (-SH), carboxy group ($-CO_2H$), formyl group (-CHO), azido group ($-N_3$), halogen (-F, -Cl, -Br, -I), oxygen (=O) or methylidene group ($=CH_2$). The alkyl group is preferably $C_{1-10}$ alkyl group, more preferably $C_{1-5}$ alkyl group, and further preferably $C_{1-3}$ alkyl group. Additionally, the alkyl group may be linear or branched. Halogen may be any of fluorine, chlorine, bromine, iodine, and preferably bromine.

$Z_1$-$X_1$ bond, $Z_1$-$X_2$ bond, $Z_2$-$Y_1$ bond and $Z_2$-$Y_2$ bond are each independently a single bond or a double bond. $Z_1$-$Z_2$ bond is a single bond, a double bond or an S-S bond.

When $X_1$, $X_2$, $Y_1$ and $Y_2$ and all hydrogen or alkyl group; $Z_1$-$X_1$ bond, $Z_1$-$X_2$ bond, $Z_2$-$Y_1$ bond and $Z_2$-$Y_2$ bond are all single bonds, and $Z_1$-$Z_2$ bond is a double bond. When $Z_1$-$Z_2$ bond is an S-S bond; $X_1$, $X_2$, $Y_1$ and $Y_2$ are each independently oxygen (-S(=O)-S-, -S(=O)-S(=O)-, $-S(=O)_2-S-$, $-S(=O)_2-S(=O)-$, or $-S(=O)_2-S(=O)_2-$) or absent (-S-S-), and preferably absent (-S-S-).

When $X_1$ is methylidene group; $Z_1$-$X_1$ bond is a double bond, $X_2$ is absent, and $Z_1$-$Z_2$ bond is a single bond. When $X_2$ is methylidene group; $Z_1$-$X_2$ bond is a double bond, $X_1$ is absent, and $Z_1$-$Z_2$ bond is a single bond. When $Y_1$ is methylidene group; $Z_2$-$Y_1$ bond is a double bond, $Y_2$ is absent, and $Z_1$-$Z_2$ bond is a single bond. When $Y_2$ is methylidene group; $Z_2$-$Y_2$ bond is a double bond, $Y_1$ is absent, and $Z_1$-$Z_2$ bond is a single bond.

$R_1$, $R_2$, $R_3$ and $R_4$ are each independently hydrogen or alkyl group. "m" and "n" each independently represent an integer of 0 to 10, preferably an integer of 1 to 5, and more preferably an integer of 1 to 3.

Additionally, in the formula (1), "A" is a residue of the aromatic polyhydric alcohol, preferably a residue of the aromatic diol. The aromatic polyhydric alcohol is not particularly limited, and preferably an aromatic diol compound, a glycol-modified aromatic diol compound, or a glycol-modified aromatic dicarboxylic acid, and more preferably a glycol-modified aromatic diol compound or a glycol-modified aromatic dicarboxylic acid. An aromatic glycol compound is not particularly limited, and exemplified by 1,2-phenylene glycol, 1,3-phenylene glycol, 1,4-phenylene glycol, naphthalenediol, bisphenol A, bisphenol F and the like. Additionally, the glycol-modified aromatic diol compound is not particularly limited, and exemplified by an ethylene oxide adduct of 1,2-phenylene glycol, a propylene oxide adduct of 1,2-phenylene glycol, an ethylene oxide adduct of 1,3-phenylene glycol, a propylene oxide adduct of 1,3-phenylene glycol, an ethylene oxide adduct of 1,4-phenylene glycol, a propylene oxide adduct of 1,4-phenylene glycol, an ethylene oxide adduct of naphthalenediol, a propylene oxide adduct of naphthalenediol, an ethylene oxide adduct of bisphenol A, a propylene oxide adduct of bisphenol A, an ethylene oxide adduct of bisphenol F, a propylene oxide adduct of bisphenol F and the like. Additionally, the glycol-modified aromatic dicarboxylic acid is not particularly limited, and exemplified by ethylene-glycol-modified terephthalic acid, propylene-glycol-modified terephthalic acid, ethylene-glycol-modified isophthalic acid, propylene-glycol-modified isophthalic acid, ethylene-glycol-modified *ortho*-phthalic acid, propylene-glycol-modified *ortho*-phthalic acid and the like. These may be used alone or in combination of two or more. Among them, an ethylene oxide adduct of bisphenol A, a propylene oxide adduct of bisphenol A, or ethylene-glycol-modified terephthalic acid are preferable. "p" represents an integer of 1 to 10, preferably an integer of 1 to 5, and more preferably an integer of 1 to 3.

When a total constitutional unit in the aromatic polyester is taken as 100 mol%, the aromatic polyester of the present invention preferably comprise the constitutional unit represented by formula (1) by 50 mol% or more, more preferably 60 mol% or more, further preferably 70 mol% or more, much further preferably 80 mol% or more, even more preferably 90 mol% or more, especially preferably 95 mol% or more, most preferably 99 mol% or more, and 100 mol% may be acceptable.

The preferred formula (1) is exemplified by following formulae (2) to (5).

[Chemical formula 2]

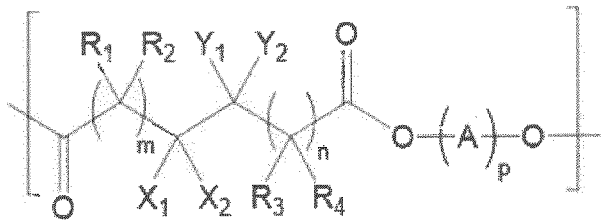

(2)

In the formula (2), it is preferable that $X_1$, $X_2$, $Y_1$ and $Y_2$ are each independently hydrogen, alkyl group, hydroxy group, sulfanyl group, carboxy group, formyl group, azido group or halogen, wherein not all $X_1$, $X_2$, $Y_1$ and $Y_2$ are hydrogen or alkyl group. It is more preferable that $X_1$ and/or $Y_1$ are/is hydroxy group, sulfanyl group, carboxy group, formyl group, azido group or halogen. It is further preferable that $X_1$ is hydroxy group, sulfanyl group, carboxy group, formyl group, azido group or halogen, and $Y_1$ is hydrogen. Structure of formula (2) enables various chemical modifications, such as giving a site for initiating living radical polymerization, and the like.

[Chemical formula 3]

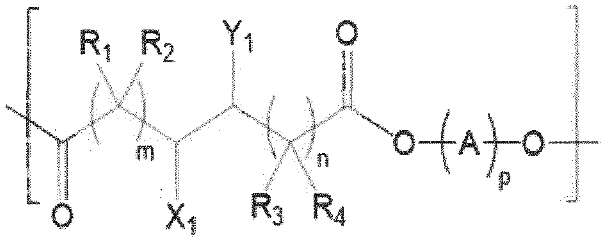

(3)

In the formula (3), it is preferable that $X_1$ and $Y_1$ are each independently methylidene group. It is more preferable that one of $X_1$ or $Y_1$ is methylidene group and the other is hydrogen. It is further preferable that $X_1$ is methylidene group and $Y_1$ is hydrogen.

[Chemical formula 4]

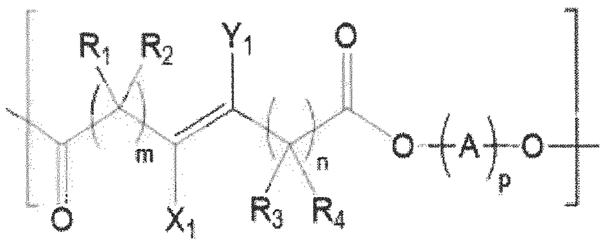

(4)

In the formula (4), it is preferable that $X_1$ and $Y_1$ are each independently hydrogen or alkyl group, and more preferably hydrogen. When $X_1$ and/or $Y_1$ are/is alkyl group, carbon number thereof is preferably 1 to 10, more preferably 1 to 5, and further preferably 1 to 3. Additionally, the alkyl group may be linear or branched. Structure formula (4) enables various chemical modifications, such as giving a reactive site for thiol-ene reaction and Michael addition reaction, and the like.

[Chemical formula 5]

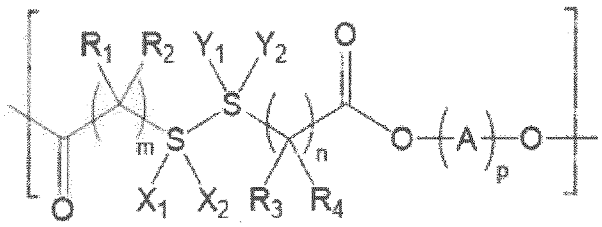 (5)

In the formula (5), it is preferable that $X_1$, $X_2$, $Y_1$ and $Y_2$ are each independently absent (a disulfide bond) or oxygen (=O). It is more preferable that $X_1$, $X_2$, $Y_1$ and $Y_2$ are all absent (a disulfide bond).

In the formulae (2) to (5), it is preferable that $R_1$, $R_2$, $R_3$ and $R_4$ are each independently hydrogen or alkyl group, and more preferably hydrogen. When $R_1$ to $R_4$ are each independently alkyl group, carbon number thereof is preferably 1 to 10, more preferably 1 to 5, and further preferably 1 to 3. Additionally, the alkyl group may be linear or branched. "m" and "n" each independently represent an integer of 0 to 10, preferably an integer of 1 to 5, and more preferably an integer of 1 to 3. Especially, in the formula (2) and formula (3), it is preferable that "m" is 0 and "n" is 1; in the formula (4), it is preferable that both "m" and "n" are 0; in the formula (5), it is preferable that both "m" and "n" are 2. In the any of formulae (2) to (5), "p" preferably represents an integer of 1 to 10, more preferably an integer of 1 to 5, and further preferably an integer of 1 to 3.

The preferred formula (1) is not particularly limited, and exemplified by following structures.

[Chemical formula 6]

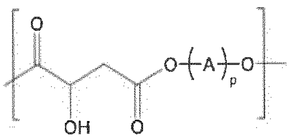 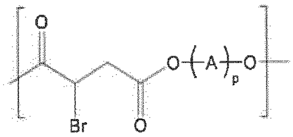 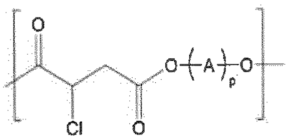 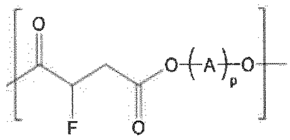

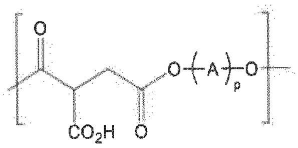 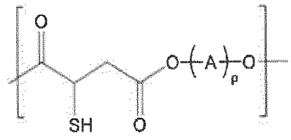 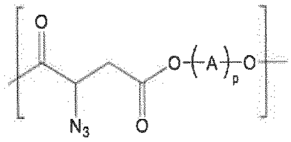 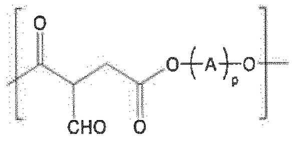

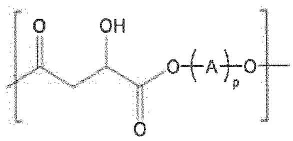 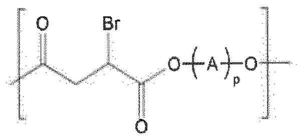 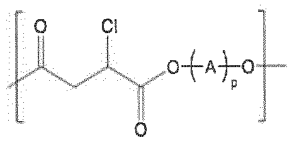 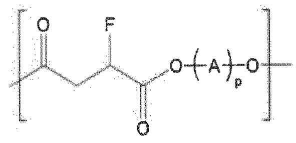

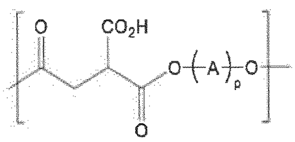 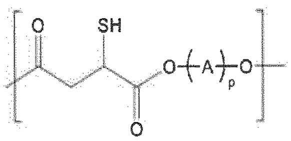 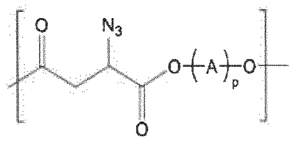 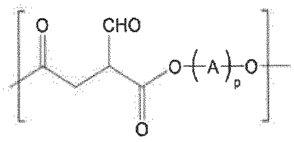

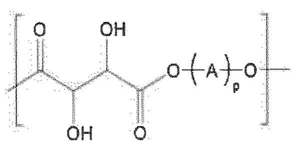 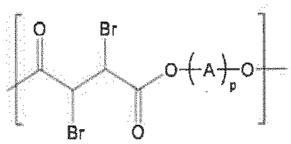 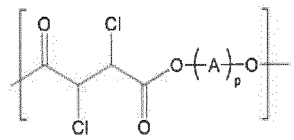 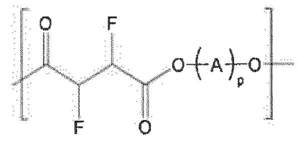

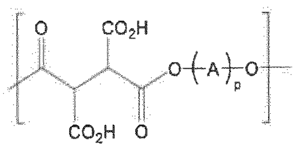 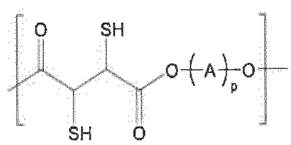 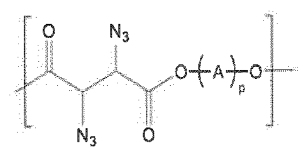 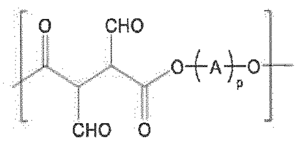

[Chemical formula 7]

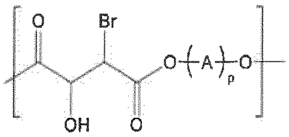
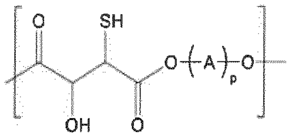
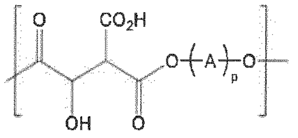
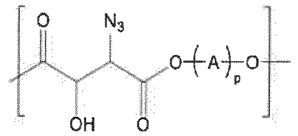
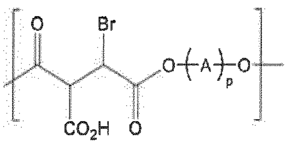
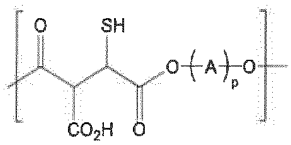
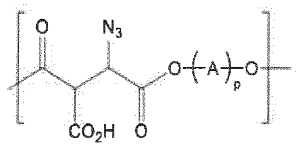
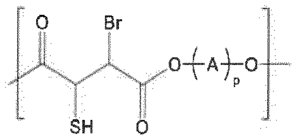
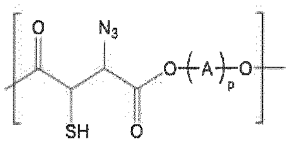
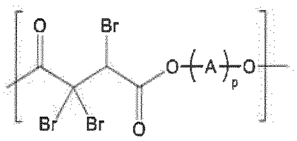
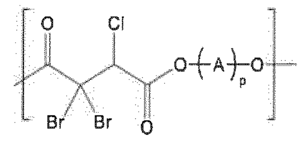
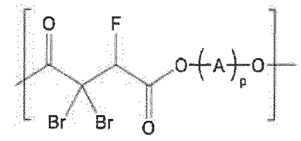
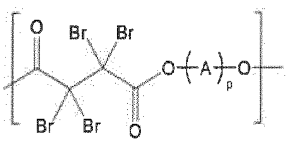
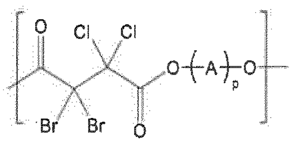
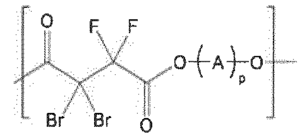
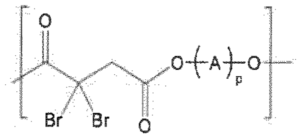
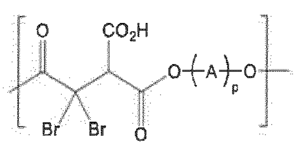
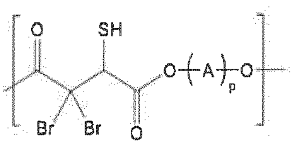
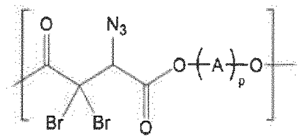
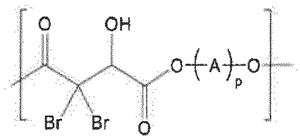
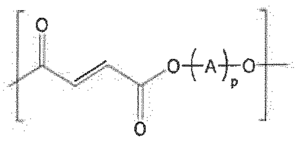
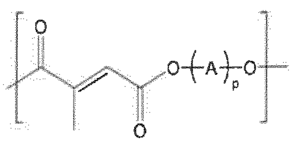
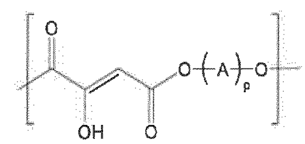
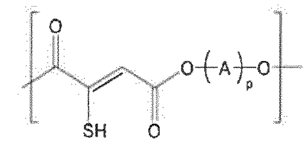

[Chemical formula 8]

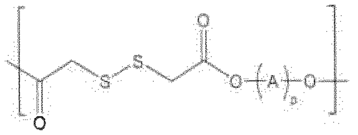
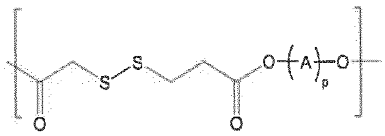
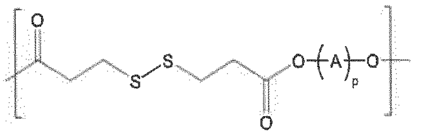
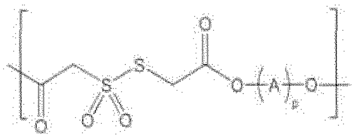
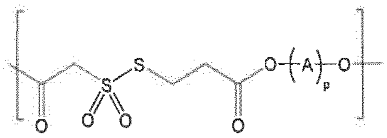
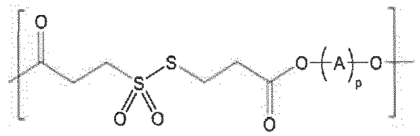
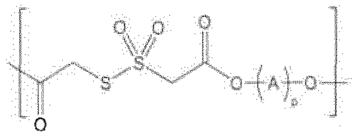
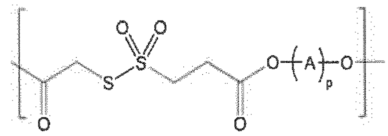
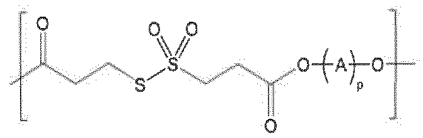
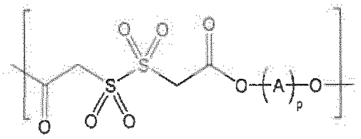
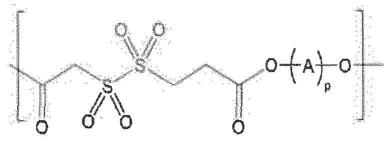
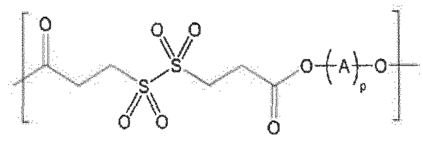
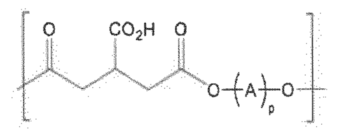
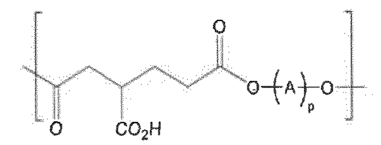
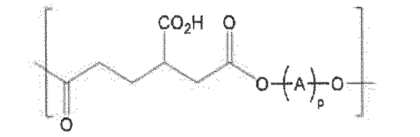
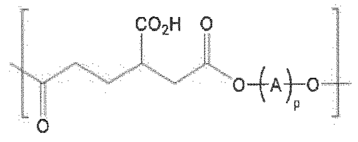
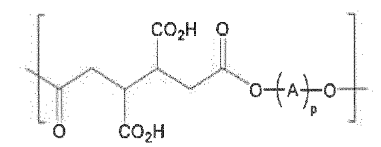
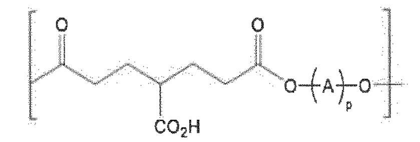

The aromatic polyester of the present invention preferably comprises fluorine by 500 mass ppm or more, and because of showing water repellency and oil repellency, more preferably 1000 mass ppm or more, and further preferably 2000 mass ppm or more. Additionally, because of good heat resistance and chemical resistance, the aromatic polyester preferably comprises fluorine by 10000 mass ppm or less, more preferably 8000 mass ppm or less, and further preferably 5000 mass ppm or less.

The aromatic polyester of the present invention preferably comprises sulfur by 250 mass ppm or more, and because a melting point tends to rise, more preferably 500 mass ppm or more, further preferably 1000 mass ppm or more. Additionally, because of good heat resistance and chemical resistance, the aromatic polyester preferably comprises sulfur by 5000 mass ppm or less, more preferably 4000 mass ppm or less, and further preferably 3000 mass ppm or less.

The aromatic polyester of the present invention is substantially free from an organic solvent, preferably. By substantially not comprising the organic solvent, it is possible to produce an adhesive and a paint that is excellent for human body and environment. The term "the aromatic polyester is substantially free from an organic solvent" means that, in 100 mass% of the aromatic polyester, the aromatic polyester preferably comprises an organic solvent by 5 mass% or less, more preferably 2 mass% or less, further preferably 1 mass% or less, and especially preferably 0 mass%.

The organic solvent is exemplified by an aromatic hydrocarbon such as benzene, toluene, xylene and the like; an aliphatic hydrocarbon such as hexane, heptane, octane and the like; a ketone solvent such as acetone, methyl ethyl ketone and the like; an ester solvent such as ethyl acetate, propyl acetate and the like; an ether solvent such as dimethyl ether, diethyl ether and the like; an aprotic solvent such as N-methylpyrrolidone (NMP), N,N-dimethylformamide (DMF) and the like.

The aromatic polyester of the present invention preferably has a number average molecular weight of 2,000 or more and 30,000 or less, more preferably 3,000 or more and 25,000 or less, and further preferably 4,000 or more and 20,000 or less. If the number average molecular weight is the lower limit or more, coated film will be tough and the physical characteristics of the coated film when subjected to processing will be good. Additionally, if the number average molecular weight is the upper limit or less, it will be possible to prevent melt viscosity during polycondensation from becoming too high and take-out from reaction vessel (flask) will be easy.

The aromatic component of the aromatic polyester of the present invention is derived from the aromatic polyhydric alcohol component. In general, monomers comprising aromatic component has a high melting point of 200 to

300°C. Therefore, when polymerizing polyester, it is necessary to react at a temperature of the melting point or more, and it is difficult to melt at a temperature of 150°C or lower to be uniform. However, by modifying both ends of the aromatic carboxylic acid with glycol component, melting point can be lowered and polymerization can be conducted at a low temperature. For example, melting point of terephthalic acid, which is raw material for PET, is 300°C. In contrast, melting point of BHET (bis(2-hydroxyethyl) terephthalate), which is modified with ethylene glycol at both ends, is 110°C, thereby it is possible to conduct polycondensation at a temperature of 150°C or lower.

In addition to BHET, ethylene glycol 2 mol adduct of bisphenol and propylene glycol 5 mol adduct of bisphenol, which are modified with glycol component at both ends, make it possible to conduct polymerization at a low temperature by lowering melting point thereof.

Furthermore, the use of triflate catalyst (trifluoromethanesulfonate catalyst) enables esterification reaction at a low temperature of about 80 to 150°C. Conventionally, when monomers comprising a functional group except for the functional group involved in polymerization (hydroxy group, sulfanyl group, carboxy group, formyl group, azido group, halogen, methylidene group and the like), reactions were conducted at a high temperature. Therefore, since these functional groups caused side reactions such as hydrolysis (solvolysis), elimination and the like, it was difficult to produce the aromatic polyester. In contrast, in the present invention, it is possible to conduct reactions at a low temperature. Even if monomers comprising a functional group except for the functional group involved in polymerization (the operative functional group) are used, side reactions do not occur, resulting in producing the aromatic polyester. Therefore, the aromatic polyester can be produced by a process comprising a step of low-temperature melt polycondensation at about 80 to 150°C.

Triflate catalyst is exemplified by rare-earth triflate catalyst. Rare-earth metals comprised in the rare-earth triflate catalyst are specifically exemplified by scandium (Sc), yttrium (Y), lanthanide chemical elements such as lanthanum (La), cerium (Ce), praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb), lutetium (Lu) and the like, and those comprising them are effective. The rare-earth metals may be used alone or in combination. Among them, scandium is preferable. Triflate catalyst except for the rare-earth metals is specifically exemplified by those comprising copper (Cu), zinc (Zn), tin (Sn), hafnium (Hf), bismuth (Bi) and the like, and those are effective. The triflate is exemplified by $X(OSO_2CF_3)$; wherein X represents rare-earth or the other chemical elements. Among them, X is preferably scandium (Sc).

The aromatic polyester can be produced by melt polycondensation at a low temperature, specifically and preferably 150°C or lower. Since side reactions due to the functional group except for the functional group involved in polymerization (the operative functional group) can be suppressed, it is more preferably 140°C or lower, further preferably 130°C or lower, much further preferably 120°C or lower, especially preferably 110°C or lower. The lower limit is not particularly limited, and preferably 60°C or higher. Additionally, since reaction time can be shortened, it is more preferably 70°C or higher, further preferably 80°C or higher, and especially preferably 90°C or higher.

The aromatic polyester can be polymerized without substantially using organic solvent. The term "without substantially using organic solvent" means that the aromatic polyester preferably comprises organic solvent in an amount of 5 parts by mass or less, more preferably 2 parts by mass or less, further preferably 1 part by mass or less, and especially preferably 0 parts by mass, with respect to 100 parts by mass of the produced aromatic polyester. By substantially not using organic solvent, volumetric efficiency of reaction can be improved, and furthermore the resin that is excellent for human body and environment can be produced.

The aromatic polyester can be polymerized without substantially using radical inhibitor. The term "without substantially using radical inhibitor" means that the aromatic polyester preferably comprises radical inhibitor in amount of 5 parts by mass or less, more preferably 2 parts by mass or less, further preferably 1 part by mass or less, and especially preferably 0 parts by mass, with respect to 100 parts by mass of the produced an aromatic polyester. By substantially not using radical inhibitor, the aromatic polyester can be produced efficiently, and the aromatic polyester does not comprise impurities derived from radical inhibitor. The radical inhibitor is exemplified by hydroquinone, 2-methylhydroquinone, benzoquinone, 2-methylbenzoquinone and the like.

Reaction time can be appropriately set according to the type of monomers (the polycarboxylic acid component and the aromatic diol component), the type of catalysts or reaction temperature. Specifically, it is preferably 1 to 20 hours, more preferably 2 to 15 hours, and further preferably 3 to 12 hours.

The aromatic polyester of the present invention can be used for an adhesive or a paint. The content of the aromatic polyester in the adhesive or the paint is preferably 50 mass% or more, more preferably 60 mass% or more, and further preferably 70 mass% or more, in terms of solid content. Additionally, it is preferably 95 mass% or less, and more preferably 90 mass% or less.

EXAMPLES

Hereinafter, the present invention will be more specifically explained with reference to examples, but the present

invention is not limited to the aspects to the following examples, and can be appropriately modified within the scope not departing from the gist of the present invention. These variations are included in technical scope of the present invention.

In the following, unless otherwise noted, "parts" represents parts by mass. Additionally, measurement and evaluation methods employed in the present application are as follows.

<Resin composition>

The aromatic polyester was dissolved into deuterated chloroform. By using NMR device (manufactured by VARIAN, 400-MR), a molar ratio was obtained from a ratio of integrated value in $^1$H-NMR analysis.

<Number average molecular weight (Mn)>

The aromatic polyester sample was dissolved into N,N-dimethylformamide so that resin concentration comes to about 0.5 mass%. Thereafter, it was filtered with a polytetrafluoroethylene membrane filter having a pore size of 0.5 μm to make a sample for measurement. Molecular weight was measured by gel permeation chromatography (GPC) using N,N-dimethylformamide as mobile phase and a differential refractometer as a detector. Measurement was performed at a flow rate of 1 mL/min and a column temperature of 30°C. KF-802, 804L, 806L manufactured by Showa Denko K.K. was used as the column. Monodisperse polystyrene was used as a standard for molecular weight. When calculating number average molecular weight, the part corresponding to less than 1000 of molecular weight was omitted.

<Elemental analysis (content of fluorine and sulfur)>

<Methods for pretreatment and measurement>

Sample (aromatic polyester, 20 mg) was collected in a porcelain boat, and burned in a tube furnace equipped with a quartz pipe (manufactured by Mitsubishi Chemical Analytech Co., Ltd., AQF-2100H). Combustion gas was absorbed with hydrogen peroxide solution (0.3 mass%). After that, fluoride ion and sulfate ion in absorbent solution were measured by ion chromatography (manufactured by Thermo Fisher Scientific, Inc., ICS-1600).

<Conditions for automatic furnace combustion>

Device: manufactured by Mitsubishi Chemical Analytech Co., Ltd., automatic furnace for combustion AQF-2100H
Decomposition temperature of sample: 1000°C
Burning program: 15 minutes
Absorbent liquid composition: aqueous hydrogen peroxide solution (0.3 mass%)

<Conditions for ion chromatography analysis>

Device: manufactured by Thermo Fisher Scientific, Inc., ion chromatography system ICS-1600
Column: anion-exchange column AS 12A
Eluent composition: mixed aqueous solution of sodium carbonate/sodium hydrogen carbonate
Separating program: 15 minutes
Detector: electronical conductivity detector

<Content of organic solvent>

Sample (aromatic polyester, about 0.5 g) was weighed on an aluminum dish (referred to as A). Next, the sample was put in a dryer at 150°C, and dried under a reduced pressure of 5 mmHg or less for 2 hours. After drying, the sample was cooled so that it reached to a room temperature, and taken out (referred to as B). According to following equation, content of organic solvent was calculated.

$$\text{Equation: Content of organic solvent (mass\%)} = (A-B)/A \times 100$$

Example 1

Process for producing aromatic polyester No. 1

In a glass flask (50 ml) equipped with a stirrer, bis(2-hydroxyethyl) terephthalate (BHET, 100 mol%), maleic acid (100 mol%), and scandium triflate (1.0 mol%) were placed and homogenized at 100°C. After the raw materials were dissolved, pressure inside reaction system was gradually reduced to 5 mmHg over 30 minutes. Further, under vacuum of 0.3 mmHg or less, polycondensation was conducted at 110°C for 4 hours. After that, contents were taken out and cooled. Composition, number average molecular weight and the like of the produced aromatic polyester No. 1 were shown in Table 1.

Examples 2 to 11, Comparative Examples 1 to 3

Process for producing aromatic polyesters No. 2 to 14

Aromatic polyesters No. 2 to 14 was produced in the same manner as the aromatic polyester No.1 except for changing raw materials and ratio thereof, and the same evaluation as the aromatic polyester No.1 was performed. Evaluation results were shown in Table 1 to Table 2. In Example 7, DURANOL-T5650E (polycarbonatediol manufactured by Asahi Kasei Chemicals Corp.: mixture of 1,5-pentanediol/1,6-hexanediol, number average molecular weight about 500) and adipic acid (50 mol%) were used as polyhydric alcohol component. In Example 11, 1,5-pentanediol (50 mol%) was used as polyhydric alcohol component.

[Table 1]

| Example | Resin No. | Polycarboxylic acid component (mol%) | Polyhydric alcohol component (mol%) | Catalyst (mol%) | Reaction temperature (°C) | Reaction time (hr) | Mn ($\times10^4$) | Fluorine content (ppm by mass) | Sulfur content (ppm by mass) | Structure of aromatic polyester | Content of constitutional unit represented by formula (1) (mol%) |
|---|---|---|---|---|---|---|---|---|---|---|---|
| 1 | 1 | Maleic acid 100 | BHET 100 | $Sc(OTf)_3$ (1.0) | 110 | 4 | 0.97 | 4200 | 2200 | Formula(4). m. n=0, X1, Y1=hydrogen, A=BHET | 100 |
| 2 | 2 | Maleic acid 100 | BPE-20T 100 | $Sc(OTf)_3$ (1.0) | 100 | 5 | 0.97 | 3857 | 2285 | Formula(4). m. n=0, X1, Y1=hydrogen, A=BPE−20T | 100 |
| 3 | 3 | Maleic acid 100 | BP-5P 100 | $Sc(OTf)_3$ (1.0) | 100 | 11.5 | 0.44 | 4900 | 2500 | Formula(4). m. n=0, X1, Y1=hydrogen, A=BP-5P | 100 |
| 4 | 4 | Malic acid 100 | BHET 100 | $Sc(OTf)_3$ (1.0) | 110 | 2 | 0.88 | 3100 | 1600 | Formula(2). m. n=0, X1=OH, X2, Y1~Y2=hydrogen, A=BHET | 100 |
| 5 | 5 | Malic acid 100 | BHET 100 | $Sc(OTf)_3$ (0.5) | 110 | 4 | 0.9 | 1500 | 800 | Formula(2). m. n=0, X1=OH, X2, Y1~Y2=hydrogen, A=BHET | 100 |
| 6 | 6 | Malic acid 100 | BHET 100 | $Sc(OTf)_3$ (0.2) | 110 | 6 | 0.9 | 600 | 350 | Formula(2), m, n=0, X1=OH, X2, Y1~Y2=hydrogen, A=BHET | 100 |
| 7 | 7 | 1,2,3-propanetricarboxylic acid 50<br>Adipic acid 50 | BHET 100 | $Sc(OTf)_3$ (1.0) | 100 | 3 | 1.04 | 3925 | 2313 | Formula(2). m=1. n=0. X1=COOH. X2, Y1~Y2, R1~R2=hydrogen, A=BHET | 50 |
| 8 | 8 | Thiomalic acid 100 | BHET 100 | $Sc(OTf)_3$ (1.0) | 100 | 5 | 0.9 | 4027 | 2397 | Formula(2), m, n=0, X1=SH, X2, Y1~Y2=hydrogen, A=BHET | 100 |
| 9 | 9 | Thiomalic acid 100 | BHET 50<br>Duranol T5650E 50 | $Sc(OTf)_3$ (1.0) | 95 | 6 | 0.99 | 3549 | 2116 | Formula(2). m. n=0. X1=SH. X2, Y1~Y2=hydrogen, A=BHET, Duranol T5650E | 100 |
| 10 | 10 | 3,3'-dithiodipropionic acid 100 | BHET 100 | $Sc(OTf)_3$ (0.5) | 115 | 5 | 0.3 | 1500 | 800 | Formula(5). m=2. n=2. X1~X2, Y1~Y2, R1~R4=hydrogen, A=BHET | 100 |
| 11 | 11 | 3,3'-dithiodipropionic acid 100 | BHET 50<br>1,5-pentanediol 50 | $Sc(OTf)_3$ (0.5) | 115 | 5 | 0.26 | 1500 | 800 | Formula(5). m=2. n=2. X1~X2, Y1~Y2, R1~R4=hydrogen, A=BHET, 1,5-pentanediol | 100 |

[Table 2]

| Comparative Example | Resin No. | Polycarboxylic acid component (mol%) | | Polyhydric alcohol component (mol%) | | Catalyst (mol%) | Reaction temperature (°C) | Reaction time (hr) | Mn ($\times 10^4$) | Note | Content of constitutional unit represented by formula (1) (mol%) |
|---|---|---|---|---|---|---|---|---|---|---|---|
| 1 | 12 | Maleic acid | 100 | BHET | 100 | N/A | 100 | 4 | - | Polycondensation not proceeded | 0 |
| 2 | 13 | Maleic acid | 100 | BHET | 100 | Al | 100 | 4 | - | Polycondensation not proceeded | 0 |
| 3 | 14 | Thiomalic acid | 100 | BHET | 100 | $Sc(OTf)_3$ (1.0) | 120 | 6.5 | - | Gelation | 0 |

No. 3 In the system where a propylene oxide adduct of bisphenol A (BP-5P) was used as the polyhydric alcohol

component, reaction was slower for the secondary OH group involved in the reaction than the other primary OH group. Therefore, it is considered that molecular weight did not increase so much even though reaction time was long (11.5 hours) and aromatic polyester comprised structure of formula (1).

No. 5 Even when amount of catalyst was reduced from 1.0 mol% to 0.5 mol% using the same raw material as No.4, aromatic polyester comprising structure of formula (1) was produced. However, it took 4 hours for the reaction to produce a polymer with the same molecular weight.

No. 6 Even when amount of catalyst was reduced from 1.0 mol% to 0.2 mol% using the same raw material as No.4, aromatic polyester comprising structure of formula (1) was produced. However, it took 6 hours for the reaction to produce a polymer with the same molecular weight.

No. 12 In the system of no catalysts, even when the same reaction was conducted, esterification reaction did not proceed and molecular weight did not increase. Therefore, polyester comprising structure of formula (1) could not be produced.

No. 13 When a general transesterification catalyst such as Al catalyst was used, esterification reaction did not proceed and molecular weight did not increase. Therefore, aromatic polyester comprising structure of formula (1) could not be produced.

No. 14 When thiomalic acid was used as dicarboxylic acid component, gelation occurred due to long-time reaction at a high temperature. Thereby, aromatic polyester comprising structure of formula (1) could not be produced. This is thought to be due to the formation of three-dimensional crosslinks by intramolecular coupling of branched SH groups in the polyester molecule, which was produced by melt polycondensation.

## INDUSTRIAL APPLICABILITY

The aromatic polyester of the present invention comprises a specific constitutional unit. Additionally, by using a specific polycarboxylic acid component and a specific aromatic diol component, the aromatic polyester can be synthesized by dehydration polycondensation under mild conditions without using solvent. By this method, it is possible to synthesize a polyester having a double bond at a main chain or a side chain thereof, or a polyester having a functional group except for functional groups involved in condensation. The polyester comprising a double bond at a main chain gives a reactive site for thiol-ene reaction and Michael reaction. The polyester comprising halogen at a side chain enables various chemical modification, such as giving a site for initiating living radical polymerization, and the like. The polyester comprising mercapto group at a side chain gives a reactive site for Michael addition reaction. Therefore, these are very useful polymers.

## Claims

1. An aromatic polyester comprising a polycarboxylic acid component and a polyhydric alcohol component as a copolymerization component, wherein,

   the aromatic polyester comprises a polycarboxylic acid component having an operative functional group by 50 mol% or more when a total amount of the polycarboxylic acid component is taken as 100 mol%, and
   the aromatic polyester comprises an aromatic polyhydric alcohol component by 50 mol% or more when a total amount of the polyhydric alcohol component is taken as 100 mol%.

2. The aromatic polyester according to claim 1, wherein the operative functional group is one or more selected from the group consisting of hydroxy group, sulfanyl group, carboxy group, formyl group, azido group, halogen, disulfide group, sulfonyl group, sulfinyl group and methylidene group.

3. The aromatic polyester according to claim 1 or 2, comprising a constitutional unit represented by following formula (1):

[Chemical formula 1]

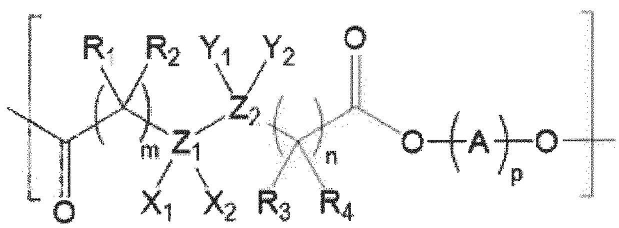

(1)

(in the formula (1),

$X_1$, $X_2$, $Y_1$ and $Y_2$ are each independently hydrogen, alkyl group, hydroxy group, sulfanyl group, carboxy group, formyl group, azido group, halogen, oxygen or methylidene group.
$Z_1$-$X_1$ bond, $Z_1$-$X_2$ bond, $Z_2$-$Y_1$ bond and $Z_2$-$Y_2$ bond are each independently a single bond or a double bond.
$Z_1$-$Z_2$ bond is a single bond, a double bond or an S-S bond.
When $X_1$, $X_2$, $Y_1$ and $Y_2$ are all hydrogen or alkyl group; $Z_1$-$X_1$ bond, $Z_1$-$X_2$ bond, $Z_2$-$Y_1$ bond and $Z_2$-$Y_2$ bond are all single bonds, and $Z_1$-$Z_2$ bond is a double bond.
When $Z_1$-$Z_2$ bond is an S-S bond; $X_1$, $X_2$, $Y_1$ and $Y_2$ are each independently oxygen or absent.
When $X_1$ is methylidene group; $Z_1$-$X_1$ bond is a double bond, $X_2$ is absent, and $Z_1$-$Z_2$ bond is a single bond.
When $X_2$ is methylidene group; $Z_1$-$X_2$ bond is a double bond, $X_1$ is absent, and $Z_1$-$Z_2$ bond is a single bond.
When $Y_1$ is methylidene group; $Z_2$-$Y_1$ bond is a double bond, $Y_2$ is absent, and $Z_1$-$Z_2$ bond is a single bond.
When $Y_2$ is methylidene group; $Z_2$-$Y_2$ bond is a double bond, $Y_1$ is absent, and $Z_1$-$Z_2$ bond is a single bond.
"A" is a residue of the aromatic polyhydric alcohol.
$R_1$, $R_2$, $R_3$ and $R_4$ are each independently hydrogen or alkyl group.
"m" and "n" each independently represent an integer of 0 to 10.
"p" represents an integer of 1 to 10.).

**4.** The aromatic polyester according to any one of claims 1 to 3, comprising fluorine by 500 mass ppm or more, and sulfur by 250 mass ppm or more.

**5.** The aromatic polyester according to any one of claims 1 to 4, wherein the aromatic polyester is substantially free from an organic solvent

**6.** A process, comprising a step of low-temperature melt polycondensation at 80 to 150°C to produce the aromatic polyester according to any one of claims 1 to 5.

**7.** An adhesive, comprising the aromatic polyester according to any one of claims 1 to 5.

**8.** A paint, comprising the aromatic polyester according to any one of claims 1 to 5.

**INTERNATIONAL SEARCH REPORT**

International application No. PCT/JP2021/004433

A. CLASSIFICATION OF SUBJECT MATTER
C08G 63/133(2006.01)i
FI: C08G63/133
According to International Patent Classification (IPC) or to both national classification and IPC

B. FIELDS SEARCHED
Minimum documentation searched (classification system followed by classification symbols)
C08G63/00-63/91; C09D; C09J

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 63-172728 A (SAN NOPCO LIMITED) 16 July 1988 (1988-07-16) claims, page 5, lower left column, lines 19-20, page 6, lower left column, lines 17-18, example (table 1) | 1-3, 5, 7, 8<br>4, 6 |
| X<br>Y | JP 2006-169509 A (FUJI XEROX CO., LTD.) 29 June 2006 (2006-06-29) claims, paragraphs [0047]-[0051], example 4 | 1-6<br>4, 6 |
| X<br>Y | JP 2015-82070 A (KAO CORP.) 27 April 2015 (2015-04-27) claims, examples (resin a-6) | 1-3, 5<br>4, 6 |
| X<br>Y | JP 6-138701 A (MITSUBISHI RAYON CO., LTD.) 20 May 1994 (1994-05-20) claims, example (polyester copolymer 2) | 1-3, 5<br>4, 6 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 April 2021 (09.04.2021) | 20 April 2021 (20.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2021/004433

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2008-501048 A (BASF AKTIENGESELLSCHAFT) 17 January 2008 (2008-01-17) claims, paragraph [0048], example 19 | 1-3, 5-8<br>4 |

Form PCT/ISA/210 (continuation of second sheet) (January 2015)

**INTERNATIONAL SEARCH REPORT**
Information on patent family members

International application no.
PCT/JP2021/004433

| Patent Documents referred in the Report | Publication Date | Patent Family | Publication Date |
|---|---|---|---|
| JP 63-172728 A | 16 Jul. 1988 | (Family: none) | |
| JP 2006-169509 A | 29 Jun. 2006 | US 2006/0110674 A1 claims, paragraphs [0043]-[0047], example 4 CN 1778827 A | |
| JP 2015-82070 A | 27 Apr. 2015 | (Family: none) | |
| JP 6-138701 A | 20 May 1994 | (Family: none) | |
| JP 2008-501048 A | 17 Jan. 2008 | US 2007/0213501 A1 claims, paragraph [0073], example 19 WO 2005/118677 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001302779 A
- JP 2012521469 A
- JP 2003306535 A